# EUROPÄISCHE PATENTSCHRIFT

(11) **EP 1 347 028 B1**
(45) Veröffentlichungstag und Bekanntmachung des Hinweises auf die Patenterteilung: **12.04.2006**
(21) Anmeldenummer: 03004541.3
(22) Anmeldetag: 28.02.2003
(51) Int. Cl.: C09J 153/02

(54) **Verwendung einer Haftklebemasse zur Herstellung eines Haftklebefolienstreifens**
Use of an adhesive composition for the fabrication of adhesive strips
Utilisation d'une composition adhesive pour la fabrication de bandes adhésives

(30) Priorität: 19.03.2002 DE 10212049
(43) Veröffentlichungstag der Anmeldung: 24.09.2003
(73) Patentinhaber: tesa AG, 20253 Hamburg (DE)
(72) Erfinder: Krawinkel, Thorsten, Dr., 22457 Hamburg (DE); Lühmann, Bernd, Dr., 22844 Norderstedt (DE); Bargmann, Renke, 22527 Hamburg (DE)

(56) Entgegenhaltungen:
- WO-A-00/22062
- WO-A-01/55276
- US-A- 5 750 607
- US-B1- 6 172 145
- US-B1- 6 184 285

## Beschreibung

Die Erfindung betrifft die Verwendung einer Haftklebemasse auf der Basis von Styrolblockcopolymeren mit Elastomerblöcken, welche für Haftklebfolienstreifen zur Schaffung einer durch dehnende Verstreckung in Richtung der Verklebungsebene wieder lösbare Verbindung eingesetzt wird.

Elastisch oder plastisch hochdehnbare Selbstklebebänder, welche sich durch dehnendes Verstrecken in der Verktebungsebene rückstands- und zerstörungsfrei wieder ablösen lassen, sind beispielsweise aus der US 4,024,312 A, DE 33 31 016 C2, WO 92/11332 A1, WO 92/11333 A1, DE 42 22 849 A1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 858 A1, WO 99/37729 A1 und DE 100 03 318 A1 bekannt und werden nachfolgend auch als stripfähige Selbstklebebänder bezeichnet.

Eingesetzt werden solche stripfähigen Selbstklebebänder häufig in Form von ein- oder beidseitig haftklebrigen Klebefolienstreifen, die bevorzugt einen nicht haftklebrigen Anfaßbereich aufweisen, von welchem aus der Ablöseprozeß eingeleitet wird. Besondere Anwendungen entsprechender Selbstklebebänder finden sich unter anderem in DE 42 33 872 A1, DE 195 11 288 A1, US 5,507,464 A, US 5,672,402 A und WO 94/21157 A1. Spezielle Ausführungsformen sind auch in der DE 44 28 587 A1, DE 44 31 914 A1, WO 97/07172 A1, DE 196 27 400 A1, WO 98/03601 A1 und DE 196 49 636 A1, DE 197 20 526 A1, DE 197 23 177 A1, DE 197 23 198 A1, DE 197 26 375 A1, DE 197 56 084 A1, DE 197 56 816 A1, DE 198 42 864 A1, DE 198 42 865 A1, WO 99/31193 A1, WO 99/37729 A1, WO 99/63018 A1, WO 00/12644 A1, und DE 199 38 693 A1 beschrieben.

Bevorzugte Einsatzgebiete vorgenannter stripfähiger Klebfolienstreifen beinhalten insbesondere die rückstands- und zerstörungsfrei wieder ablösbare Fixierung leichter bis mittelschwerer Gegenstände im Wohn-, Arbeits- und Bürobereich. Sie ersetzen hierbei klassische Befestigungsmittel, wie zum Beispiel Stecknadeln, Pin-Nadeln, Heftzwecken, Nägel, Schrauben, klassische Selbstklebebänder und Flüssigklebstoffe. Wesentlich für den erfolgreichen Einsatz der o. g. Klebfolienstreifen ist neben der Möglichkeit des rückstands- und zerstörungsfreien Wiederablösens verklebter Gegenstände deren einfache und schnelle Verklebung sowie für die vorgesehene Verklebungsdauer deren sicherer Halt. Hierbei ist insbesondere zu berücksichtigen, daß die Funktionsfähigkeit der Klebestreifen auf einer Vielzahl von Substraten gegeben sein muß, um als Universalfixierung im Wohn-, Arbeits- und Bürobereich dienen zu können.

Obwohl in der oben zitierten Patentliteratur eine breite Palette von Haftklebemassen für die Verwendung in stripfähigen Selbstklebebändern beschrieben werden, weisen aktuell im Markt befindliche Handelsprodukte (zum Beispiel tesa® Powerstrips® der Beiersdorf AG, 3 M Comand® Adhesive Klebstreifen der Firma 3M, sowie Plastofix® Formule Force 1000 Klebestreifen der Firma Plasto S. A.) sämtlich Haftklebemassen auf Basis von Styrolblockcopolymeren meistens mit im Elastomerblock ungesättigten Polydienblöcken auf. Typischerweise finden lineare oder radiale Blockcopolymere auf Basis von Polystyrolblöcken und Polybutadienblöcken und/oder Polyisoprenblöcken Verwendung, also zum Beispiel radiale Styrol-Butadien-(SB)ₙ und/oder lineare Styrol-Butadien-Styrol (SBS)-und/oder lineare Styrol-Isopren-Styrolblockcopolymere (SIS). Vorteile der vorgenannten styrolblockcopolymerbasierenden Haftklebemassen für den Einsatz in stripfähigen Selbstklebebändern sind zum Beispiel die mit ihnen erreichbaren sehr hohen Verklebungsfestigkeiten (bedingt u. a. durch die gleichzeitige Realisierung einer sehr hohen Kohäsion und sehr hoher Klebkräfte), eine ausgeprägte Reduzierung der Haftklebrigkeit beim verstreckenden Ablösen (welches den Ablöseprozeß deutlich erleichtert oder gar erst ermöglicht) sowie eine sehr hohe Zugfestigkeit, welche insbesondere für einen reißerfreien Ablöseprozeß wesentlich ist.

Die im Markt befindlichen Produkte, welche sämtlich Haftklebemassen auf Basis von Styrolblockcopolymeren nutzen, zeigen Schwächen bei der Verklebungsfestigkeit bei Temperaturen oberhalb von 50 °C. Durch ein Erweichen der vornehmlich aus Polystyrol bestehenden Hartphasen (Blockpolystyroldomänen) kommt es insbesondere bei der Verklebung von mittelschweren Gegenständen zum kohäsiven Versagen der Haftklebestreifen.

Ein Versagen der Verklebung tritt bei reiner Scherbelastung auf und bei einer Kippscherbelastung (bei der ein Drehmoment wirksam ist, wie zum Beispiel bei der Verklebung eines Hakens) noch deutlich stärker, als bei einer reinen Scherbelastung.

In der WO 01/55276 A1 werden vemetzbare Klebmassen auf der Basis von Styrolblockcopolymeren beschrieben mit einem Polymer, das Vinylfunktionen enthält. Darüber hinaus sind Klebmassen beschrieben, die neben diesem ersten Polymer noch ein zweites Polymer enthalten, das auch ein Styrolblockcopolymer sein kann. Bezüglich des zweiten Elastomers ist nur erwähnt, dass es sich dabei auch um ein Styrolblockcopolymer handeln kann. Die Styrolblockcopolymere werden aber nicht näher erläutert, ein bestimmter Blockpolystyrolgehalt wird nicht genannt.
Insbesondere findet sich kein Hinweis, die dortige Klebemasse in einem strippfähigen Klebestreifen einzusetzen.

Aufgabe der Erfindung ist es daher, eine verbesserte Haftklebemasse auf der Basis von Styrolblockcopolymeren für Haftklebfolienstreifen zu schaffen, die sich durch dehnende Verstreckungen in Richtung der Verklebungsebene rückstands- und zerstörungsfrei wieder ablösen lassen und auch bei erhöhter Temperatur eine gute Verklebungsfestigkeit aufweisen.

Die Aufgabe wird mit der Verwendung einer gattungsgemäßen Haftklebemasse zur Herstellung eines Haftklebefolienstreifens erfindungsgemäß gelöst, wie sie im Hauptanspruch niedergelegt ist. Gegenstand der Unteransprüche sind dabei vorteilhafte Weiterbildungen der Haftklebemasse.

Demgemäß betrifft die Erfindung die Verwendung einer Haftklebemasse zur Herstellung eines Haftklebfolienstreifens zur Schaffung einer durch dehnende Verstreckung in Richtung der Verklebungsebene wieder lösbaren Verbindung bestehend aus einem Gemisch enthaltend
a) ein Styrolblockcopolymer, das einen Anteil größer 30% an 1,2-verknüpftem Dien im Elastomerblock enthält, so dass es durch UV-Licht oder Elektronenstrahlen im Elastomerblock vernetzt werden kann, und
b) ein oder mehrere Blockcopolymere, bestehend aus Vinylaromatenblöcken und Elastomerblöcken, wobei der Blockpolyvinylaromatengehalt größer als 20 % ist, und
c) ein oder mehrere Klebharze.

Die Vernetzung der Styrolblockcopolymere in den Elastomerblöcken kann beispielsweise über Ultraviolett (UV)-Bestrahlung oder mit Hilfe von Elektronenstrahlen erfolgen. Überraschenderweise hat sich gezeigt, daß durch diese strahlenchemische Vernetzung die kohäsiven Eigenschaften des Haftklebegemischs bei hohen Temperaturen verbessert werden, wobei gleichzeitig die Stripfähigkeit beibehalten wird.

Damit stripfähige Klebebänder leicht und rückstandsfrei wieder abgelöst werden können, müssen sie bestimmte mechanische Eigenschaften besitzen. Das Verhältnis der Reißkraft und der Stripkraft muß größer als zwei, bevorzugt größer als drei sein. Dabei ist die Stripkraft diejenige Kraft, die aufgewendet werden muß, um einen Klebestreifen aus einer Klebfuge durch paralleles Ziehen in Richtung der Verklebungsebene wieder zu lösen. Das Verhältnis von Stripkraft und Reißkraft wird stark durch die Dicke der Klebestreifen beeinflußt, da die zum Ablösen benötigte Abzugskraft sich aus der Kraft zusammensetzt, welche für das Ablösen des Klebebandes von den Verklebungsuntergründen nötig ist, und der Kraft, welche zur Verformung des Klebebandes aufgewendet werden muß. Die zur Verformung des Klebebandes erforderliche Kraft ist annähernd der Dicke des Klebebandes proportional. Die zum Ablösen benötigte Abzugskraft kann im betrachteten Dickenbereich vereinfacht als konstant angenommen werden. Die Reißfähigkeit steigt hingegen proportional zu der Dicke der Klebestreifen an. Hieraus folgt, daß für Selbstklebebänder mit einem Einschichtaufbau, wie in der DE 33 31 016 C2 offenbart, die Reißfestigkeit unterhalb einer bestimmten Dicke kleiner als die Abzugskraft wird. Oberhalb einer bestimmten Dicke wird das Verhältnis von Abzugskraft zur Stripkraft hingegen größer als zwei. Wenn die Reißkraft der eingesetzten Polymere aber sehr niedrig ist, folgt daraus, daß die Dicke sehr groß werden muß, wodurch auch die Stripkräfte ansteigen. Um zu vermeiden, daß die zum Strippen benötigte Kraft zu groß wird, sollte die Stripkraft pro Klebestreifen jedoch nicht größer als 30 N sein.

Obwohl durch die strahlenchemische Vernetzung die Reißkraft etwas erhöht wird, ist sie bei ausschließlicher Verwendung der oben genannten leicht vernetzbaren Blockcopolymere als Elastomere nicht hoch genug, um reißerfrei wiederablösbare stripfähige Klebestreifen mit einem Einschichtaufbau zu realisieren.

Da durch den hohen Zweiblockgehalt bzw. den vergleichsweise niedrigen Blockpolystyrolgehalt die Klebleistung für den Halt von mittelschweren Gegenständen besonders bei erhöhten Temperaturen nicht ausreicht, sind auch Mehrschichtaufbauten mit einer reißfesten Mittelschicht, wie sie in WO 92/11333 A1 beschrieben werden, nicht realisierbar.

Überraschenderweise können durch Abmischung eines leicht vernetzenden Elastomers wie oben beschrieben mit einem Styrolblockcopolymere mit hohem Dreiblockgehalt und hohem Blockpolystyrolgehalt bei Wahl geeigneter Harze gute Klebeigenschaften bei erhöhten Temperaturen erreicht werden. Sowohl die Kohäsion als auch die Adhäsion können soweit gesteigert werden, so daß auch sehr gute Verklebungsleistungen zum Beispiel bei +80°C ermöglicht werden.
Erstaunlicherweise bleiben die besonderen Eigenschaften der Klebmassen, die gerade für den Stripprozeß erforderlich sind, wie eine hohe Dehnbarkeit und weitestgehender Verlust der Haftklebrigkeit im gedehnten Zustand, erhalten, so daß die vernetzten Haftklebmassen in stripfähigen Selbstklebebändern verwendet werden können.

Durch eine Vernetzung mit UV- bzw. Elektronenstrahlen werden wie oben beschrieben die Reißkräfte merklich erhöht, während die Stripkräfte zum Lösen der Klebeverbindung nur unwesentlich größer werden, das Verhältnis von Reißkraft zu Stripkraft wird durch eine Vernetzung günstiger, die Reißemeigung nimmt dadurch ab.

Vorzugsweise werden daher Styrolblockcopolymere mit einem radialen, stemförmigen oder linearen Aufbau eingesetzt, die einen relativ hohen Polystyrolanteil von etwa 20 bis 40 Gew.-%, vorzugsweise 25 bis 35 Gew.-% haben. Besonders vorteilhaft ist es, wenn die Styrolblockcopolymere einen Gehalt an Dreiblöcken von mehr als 60 Gew.-%, vorzugsweise mehr als 75 Gew.-%, haben.

Die erfindungsgemäße Vernetzung der Elastomerblöcke kann sowohl über UV- als auch mit Hilfe von Elektronenstrahlen erfolgen. Wie in der Literatur beschrieben lassen sich die kohäsiven Eigenschaften von Haftktebemassen auf Basis von Styrolblockcopolymeren bei hohen Temperaturen verbessern, wenn die Polymere im Elastomerteil strahlenchemisch vernetzt werden. Obwohl die meisten Styrolblockcopolymere als Elastomerblöcke Polyisopren oder Polybutadien enthalten, und somit eine große Anzahl von Doppelbindungen vorhanden ist, benötigt die Mehrheit dieser Elastomere infolge ihrer geringen Molmasse eine sehr hohe Bestrahlungsdosis für die Erzielung einer ausreichend hohen Kohäsion. Daher wurden spezielle Styrolblockcopolymere entwickelt, die besonders leicht mittels UV- oder Elektronenstrahlen vernetzt werden können. Besonders geeignet für die Vernetzung sind Systeme, einen hohen Gehalt an 1,2-verknüpften dienischen Monomereinheiten im Elastomerblock enthalten. Die Fa. Kraton Polymers bietet entsprechende spezielle Polymere für eine strahlenchemische Vernetzung an, zum Beispiel das Kraton DKX 222, ein radiales (SB)₂B₂ mit im Elastomerteil enthaltenem 1,2-verknüpftem Polybutadien. Da für die Haftklebrigkeit, insbesondere die Anfassklebrigkeit ein niedriger Polystyrolgehalt von großem Vorteil ist, besitzen dieses Elastomer nur 18% bzw. 10% Blockpolystyrol.

Infolge des niedrigen Blockpolystyrolgehaltes und des hohen Zweiblockgehaltes besitzen die leicht vernetzbaren Polymere nur eine sehr geringe Reißfestigkeit. Auch die Verklebungsfestigkeit formulierter Haftklebemassen auf Basis vorgenannter Elastomere ist wesentlich niedriger als bei Verwendung von Dreiblockcopoylmeren mit Blockpolystyrolgehalten von z.B. 25 % oder höher.

Überraschenderweise hat sich herausgestellt, daß durch Abmischung eines leicht vemetzenden Elastomers mit einem Styrolblockcopolymer mit einem derart hohen Polystyrolanteil von etwa 20 bis 40 Gew.-%, vorzugsweise 25 bis 35 Gew.-% und einem hohen Gehalt an Dreiblöcken von mehr als 60 Gew.-%, vorzugsweise mehr als 75 Gew.-% bei Verwendung eines geeigneten Harzes gute Klebeeigenschaften bei erhöhten Temperaturen erzielt werden, wobei die Kohäsion und Adhäsion soweit gesteigert werden können, daß auch sehr gute Verklebungsleistungen bei Temperaturen von etwa 80 °C ermöglicht werden. Dabei bleiben die besonderen Eigenschaften des Haftklebegemischs, die insbesondere für den Stripprozeß erforderlich sind, wie eine hohe Dehnbarkeit und der weitestgehende Verlust der Haftklebrigkeit im gedehnten Zustand, erhalten, so daß das vemetzte Haftklebegemisch in stripfähigen Selbstklebebändern verwendet werden kann.

Die Styrolblockpolymere können aus Styrol-Butadien-Blockcopolymeren oder Styrol-Isopren-Blockcopolymeren gebildet sein. Es können aber auch Blockcopolymere benutzt werden, welche weitere polydienhaltige Elastomerblöcke nutzen, wie zum Beispiel Copolymere mehrerer unterschiedlicher 1,3-Diene. Erfindungsgemäß sind jedoch auch weitere funktionalisierte Blockcopolymere, wie zum Beispiel maleinsäurehydridmodifizierte oder silanmodifizierte Styrolblockcopolymere einsetzbar.

Anstelle der vorbeschriebenen Polystyrolblöcke können auch Polymerblöcke auf Basis anderer aromatenhaltiger Homopolymere oder Copolymere mit Glasübergangstemperaturen von mehr als etwa 75 °C eingesetzt werden. Als Homo- und Copolymere werden bevorzugt C-4- bis C-12- Aromaten eingesetzt. Geeignete Polymerblöcke sind beispielsweise alpha-methylstyrolhaltige Aromatenblöcke.

Jedoch sind auch Polymerblöcke auf der Basis von (Meth)acrylat-Homopolymeren, (Meth)acrylatcopolymeren mit Glasübergangstemperaturen von mehr als 75 °C nutzbar. Hierbei können sowohl Blockcopolymere zum Einsatz kommen, welche als Hartblöcke ausschließlich solche auf Basis von (Meth)Acrylatpolymeren nutzen, als auch solche, welche sowohl Polyaromatenblöcke, zum Beispiel Polystyrolblöcke, als auch Poly(meth)acrylatblöcke nutzen.

Die Haftklebemasse hat vorzugsweise einen Anteil von 20 bis 70 Gew.-% von Styrolblockcopolymer, vorzugsweise 30 bis 60 Gew.-%, und besonders bevorzugt 35 bis 55 Gew.-%.

Die Haftklebemasse kann in bekannter Weise weitere Abmischkomponenten haben, wie zum Beispiel Klebharze, Alterungsschutzmittel, Verarbeitungshilfsmittel, Farbstoffe, optische Aufheller, Stabilisatoren etc. Die Art und Menge der Abmischkomponenten kann bedarfsweise ausgewählt werden.

Besonders vorteilhaft ist es, wenn die Haftklebemasse Vemetzungspromotoren beinhaltet, insbesondere Elektronenstrahlvemetzungspromotoren auf der Basis von multifunktionalen Acrylaten oder Thiolen bzw. UV-Vemetzer. Die Vemetzungspromotoren werden zur Erhöhung der Strahlenausbeute bei der strahlenchemischen Vernetzung eingesetzt.

Die Erfindung wird nachfolgend anhand einiger Ausführungsbeispiele näher erläutert.

Das erfindungsgemäße Haftklebegemisch basiert auf definierten Gemischen ausgewählter spezieller Styrolblockcopolymere. Die Haftklebrigkeit dieser polymeren Gemische wird durch Zugabe von der mit der Elastomerphase mischbaren Klebharzen erreicht. Als weitere Abmischkomponenten können u. a. Alterungsschutzmittel, Verarbeitungshilfsmittel, Farbstoffe, optische Aufheller sowie gegebenenfalls weitere Polymere vorzugsweise elastomerer Natur genutzt werden.

Erfindungsgemäße Styrolblockcopolymergemische enthalten:
- Ein erstes Styrolblockcopolymer, das einen hohen Anteil von 1,2-verknüpftem Polybutadien beziehnugsweise Polyisopren besitzt, das dadurch in der Haupt- oder in einer Seitenkette eine große Anzahl endständiger Doppelbindungen aufweist und durch diesen speziellen Aufbau leicht durch UV- oder Elektronenstrahlen vernetzt werden kann.
- Ein oder mehrere weitere Styrolblockcopolymere mit einem radialen, stemförmigen oder linearen Aufbau und einem hohen Polystyrolanteil von etwa 20 bis 40 Gew.-%, bevorzugt 25 bis 35 Gew.-% und einem hohen Gehalt an Dreiblöcken von über 60 Gew.-%, bevorzugt über 75 Gew.-%. Dabei können die Styrolblockcopolymere sowohl auf der Basis von Styrol-Isopren-Styrol (SIS), als auch Styrol-Butadien-Styrol (SBS) aufgebaut sein. Gemische dieser beiden sind ebenfalls nutzbar. Auch partiell oder vollständig im Elastomerblock hydrierte Elastomere sind einsetzbar.

Der Anteil des ersten Elastomers an der Summe der Elastomere sollte zwischen 20 und 80 %, bevorzugt zwischen 30 und 70 %, liegen.

Anstelle der Polystyrolblöcke können auch Polymerblöcke auf der Basis anderer aromatenhaltiger Homo- und Copolymere (bevorzugt C-8 bis C-12 Aromate) mit Glasübergangstemperaturen von mehr als 75 °C genutzt werden, wie zum Beispiel α-methylstyrolhaltige Aromatenblöcke). Gleichfalls sind Polymerblöcke auf Basis von (Meth)Acrylat-homo- und (Meth)Acrylatcopolymeren mit Glasübergangstemperaturen von mehr als 75 °C nutzbar. Hierbei können sowohl Blockcopolymere zum Einsatz kommen, welche als Hartblöcke ausschließlich solche auf Basis von (Meth)Acrylatpolymeren nutzen als auch solche, welche sowohl Polyaromatenblöcke, zum Beispiel Polystyrolblöcke als auch Poly(meth)acrylatblöcke nutzen.

Anstelle von Styrol-Butadien-Blockcopolymeren und Styroi-Isopren-Blockcopolymeren können erfindungsgemäß ebenfalls Blockcopolymere genutzt werden, welche weitere polydienhaltige Elastomerblöcke nutzen, wie zum Beispiel Copolymere mehrerer unterschiedlicher 1,3-Diene.

Erfindungsgemäß nutzbar sind des weiteren funktionalisierte Blockcopolymere, wie zum Beispiel maleinsäureanhydridmodizierte oder silanmodifizierte Styrolblockcopolymere.

Typische Einsatzkonzentrationen für die Styrolblockcopolymere liegen im Bereich zwischen 20 bis 70 Gew.-% bevorzugt im Bereich zwischen 30 bis 60 Gew.-%, besonders bevorzugt im Bereich zwischen 35 bis 55 Gew.-%.

Als weitere Polymere können solche auf Basis reiner Kohlenwasserstoffe, zum Beispiel ungesättigte Polydiene, wie natürliches oder synthetisch erzeugtes Polyisopren oder Polybutadien, chemisch im wesentlich gesättigte Elastomere, wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe, wie zum Beispiel halogenhaltige, acrylathaltige oder vinyletherhaltige Polyolefine vorhanden sein, welche die vinylaromatenhaltigen Blockcopolymere bis zu ca. 100 phr bezogen auf das Styrolblockcopolymer ersetzen können.

Die Haftklebrigkeit der Haftklebemasse kann optional erst durch thermische Aktivierung oder durch Lösemittelaktivierung erzeugt werden.

Als Klebrigmacher können bei der Haftklebemasse beispielsweise als Hauptkomponente insbesondere hydrierte und nicht hydrierte Kohlenwasserstoffharze und Polyterpenharze eingesetzt werden. Bevorzugt geeignet sind u. a.: hydrierte Polymerisate des Dicyclopentadiens (zum Beispiel Escorez 5300er Serie; Exxon Chemicals), hydrierte Polymerisate von bevorzugt C-8 und C-9 Aromaten (zum Beispiel Regalite und Regalrez Serien; Eastman Inc.//Arkon P Serie; Arakawa). Diese können durch Hydrierung von Polymerisaten aus reinen Aromatenströmen entfließen oder auch durch Hydrierung von Polymerisaten auf der Basis von Gemischen unterschiedlichen Aromaten. Geeignet sind auch teilhydrierte Polymerisate von C-8 und C-9 Aromaten (zum Beispiel Regalite und Regalrez Serien; Eastman Inc. // Arkon M; Arakawa), hydrierte Polyterpenharze (zum Beispiel Clearon M; Yasuhara), hydrierte C-5/C-9-Polymerisate (zum Beispiel ECR-373; Exxon Chemicals), aromatenmodifizierte selektiv hydrierte Dicyclopentadienderivate (zum Beispiel Escorez 5600er Serie; Exxon Chemicals). Die vorgenannten Klebeharze können sowohl allein als auch im Gemisch eingesetzt werden.

Der Einsatz hydrierter Kohlenwasserstoffharze als Abmischkomponente für vernetzbare Styrolblockcopolymere, wie beispielsweise in EP 0 447 855 A1, US 4,133,731 A und US 4,820,746 A beschrieben, ist besonders geeignet, da durch die Abwesenheit von Doppelbindungen die Vernetzung nicht gestört werden kann.

Darüber hinaus können aber auch nicht hydrierte Harze eingesetzt werden, wenn Vernetzungspromotoren, wie zum Beispiel mehrfunktionelle Acrylate eingesetzt werden.

Besonders bevorzugt unter diesen Bedingungen ist der Einsatz von Terpenharzen auf der Basis von α-Pinen (Piccolyte A- Serie der Firma Hercules, Dercolyte A- Serie der Firma DRT), da diese neben einer hohen Kohäsion auch eine sehr hohe Adhäsion auch bei hohen Temperaturen gewährleisten.

Aber auch andere nicht hydrierte Kohlenwasserstoffharze, nicht hydrierte Analoga der oben beschriebenen hydrierten Harze, können eingesetzt werden. Durch die Verwendung von Vernetzungspromotoren ist ebenfalls der Einsatz von kolophoniumbasierenden Harzen möglich. Wegen ihrer geringen Adhäsion bei erhöhten Temperaturen werden diese hauptsächlich nur als Abmischkomponenten eingesetzt.

Zur Stabilisierung der Haftklebemasse werden üblicherweise primäre Antioxidanzien wie zum Beispiel sterisch gehinderte Phenole, sekundäre Antioxidanzien wie zum Beispiel Phosphite oder Thioether und/oder C-Radikalfänger zugesetzt.

Als weitere Additive können typischerweise Lichtschutzmittel, wie zum Beispiel UV-Absorber und sterisch gehinderte Amine, Antiozonantien, Metalldesaktivatoren, Verarbeitungshilfsmittel und endblockverstärkende Harze eingesetzt werden.

Plastifizierungsmittel, wie zum Beispiel Flüssigharze, Weichmacheröle oder niedermolekulare flüssige Polymere, wie zum Beispiel niedermolekulare Polyisobutylene mit Molmassen von weniger als 1500 g/mol (Zahlenmittel), oder flüssige EPDM-Typen können in geringen Mengen von weniger als 20 Gew.-% eingesetzt werden.

Füllstoffe, wie zum Beispiel Siliziumdioxid, Glas (gemahlen oder in Form von Kugeln), Aluminiumoxide, Zinkoxide, Calciumcarbonate, Titandioxide, Ruße, etc. ebenso wie Farbpigmente und Farbstoffe sowie optische Aufheller können ebenfalls verwendet werden.

Für eine Erhöhung der Strahlenausbeute werden gegebenenfalls Vernetzungspromotoren für die Elektronenstrahlvernetzung verwendet. Als Vernetzungspromotoren können beispielsweise Vemetzungspromotoren auf der Basis multifunktionaler Acrylate oder Thiole eingesetzt werden. Bei der UV-Vernetzung müssen UV-Vemetzer wie zum Beispiel Irgacure 651 der Fa. Ciba Geigy eingesetzt werden.

Die Herstellung und Verarbeitung der Haftklebemassen kann sowohl aus der Lösung, als auch aus der Schmelze erfolgen. Besonders bevorzugt ist jedoch die Fertigung der Haftklebemassen aus der Schmelze, wobei insbesondere Batchverfahren als auch kontinuierliche Verfahren eingesetzt werden können. Besonders vorteilhaft ist die kontinuierliche Fertigung der Haftklebemassen mit Hilfe eines Extruders. Nach der Compoundierung der Haftklebemassen und anschließender Beschichtung wird die Haftklebemasse mit Hilfe von UV-Strahlung oder Elektronenstrahlen vernetzt. Für die Vernetzung mit UV-Strahlen ist die Zugabe eines Vernetzers nahezu unumgänglich. Vernetzungspromotoren können bei Elektronenstrahlvernetzung hingegen optional eingesetzt werden.

Erfindungsgemäße Haftklebemassen können sowohl für einschichtige durch dehnendes Verstrecken rückstands- und zerstörungsfrei wiederablösbare Selbstklebebänder als auch für mehrschichtige Selbstklebebänder ohne oder mit Schaumstoffzwischenträger verwendet werden.

Erfindungsgemäße Haftklebemassen können sowohl für einseitig als auch für beidseitig haftklebrige durch dehnendes Verstrecken rückstandsfrei und zerstörungsfrei wiederablösbare Selbstklebebänder genutzt werden. Einseitig haftklebrige Selbstklebebänder können hierbei zum Beispiel durch einseitige Inertisierung zuvor genannter beidseitig haftklebriger Selbstklebebänder bzw. Selbstklebestreifen erhalten werden, bzw. durch einseitige Beschichtung eines hoch dehnbaren Trägers.

Die entstandenen Haftklebefolien können als Klebebandrollen, Klebestreifen oder Stanzlingen konfektioniert werden. Optional kann ein nicht haftklebriger Anfasserbereich vorgesehen sein, von welchem aus der Ablöseprozeß ausgeführt werden kann.

Nachfolgend werden einige Beispiele für vernetzte stripfähige Haftklebemassen aufgeführt.

Die Haftklebemassen wurden hierbei in einem heizbaren Kneter mit Sigma-Schaufel (Werner und Pfleiderer LUK 1,0 K3 ausgerüstet mit einem Thermostaten LTH 303 der Fa. mgw LAUDA) bei einer Temperatur von ca. +160 bis +180 °C und unter Inertisierung mit CO2 als Schutzgas zu einer homogenen Mischung verarbeitet. Nach dem Erkalten wurden durch ca. 10-minütiges Verpressen der Klebmasse bei +120 °C bis +140 °C in einer temperierbaren Presse (Typ KHL 50 der Fa. Bucher-Guyer) einschichtige Klebstoff-Folienstücke der Dicke von 500 µm ± 50 µm (Mittelwert ± 2-fache Standardabweichung) hergestellt.

Durch Ausstanzen werden einschichtige Haftklebestreifen der gewünschten Abmessungen erhalten. Zur Herstellung mehrschichtiger Haftklebestreifen können die entsprechenden Schichten zuvor durch Kaschierung (gegebenenfalls durch Heißkaschierung) verbunden und danach die Klebestreifen durch Ausstanzen vereinzelt werden. Bei allen Haftklebemassen wurde 1 % Ebecryl 140 zugegebenen, um eine Elektronenstrahlvernetzung zu beschleunigen. Die mit der Haftklebemasse beschichteten Haftklebestreifen wurden anschließend mit einer Dosis von 80 kGy elektronenstrahlvemetzt.

**Beispiel 1:**

| | | |
|---|---|---|
| 50 Teile | Kraton DKX 222 | UV-vernetzbares SBS der Fa. Kraton |
| 50 Teile | Foral 105 | Hydrierter Kolophoniumester der Fa. Eastman |

**Beispiel 2:**

| | | |
|---|---|---|
| 50 Teile | Kraton DKX 222 | UV-vemetzbares SBS der Fa. Kraton |
| 50 Teile | Piccolyte A 115 | α-Pinen-Harz der Fa. Hercules |

**Beispiel 3:**

| | | |
|---|---|---|
| 50 Teile | Kraton D 1165 | SIS mit 30 % Blockpolystyrolgehalt der Fa. Kraton |
| 50 Teile | Piccolyte A 115 | α-Pinen-Harz der Fa. Hercules |

**Beispiel 4:**

| | | |
|---|---|---|
| 50 Teile | Kraton D 1102 | SBS mit 30 % Blockpolystyrolgehalt der Fa. Kraton |
| 50 Teile | Piccolyte A 115 | α-Pinen-Harz der Fa. Hercules |

**Beispiel 5:**

| | | |
|---|---|---|
| 25 Teile | Kraton DKX 222 | UV-vemetzbares SBS der Fa. Kraton |
| 25 Teile | Kraton D 1102 | SBS mit 30 % Blockpolystyrolgehalt der Fa. Kraton |
| 50 Teile | Piccolyte A 115 | α-Pinen-Harz der Fa. Hercules |

Bei den Haftklebestreifen mit den beispielhaften Haftklebegemischen wurden die folgenden mechanischen und klebtechnischen Daten ermittelt:

| Haftklebemasse Beispiel Nr. | Zugfestigkeit in MPa | Strip-Spannung in MPa | Schälgeschwindigkeit in mm/24 h | Kippscherstandzeit in Tagen | Versagenstemperatur in °C |
|---|---|---|---|---|---|
| 1, unvernetzt | 3,6 | 0,9 | 20 | 1 | 77 |
| 1, vernetzt | 4,1 | 1,1 | > 40 | 1 | 92 |
| 2, unvernetzt | 4,6 | 1,5 | 7 | 4 | 87 |
| 2, vernetzt | 4,9 | 1,5 | 25 | 2 | 101 |
| 3, unvernetzt | 11,5 | 1,8 | 4 | 31 | 93 |
| 3, vernetzt | 11,7 | 1,8 | 7 | 26 | 97 |
| 4, unvernetzt | 12,6 | 2,0 | 6 | 45 | 97 |
| 4, vernetzt | 13,2 | 2,1 | 10 | 52 | 101 |
| 5, unvernetzt | 9,5 | 1,5 | 4 | 24 | 86 |
| 5, vernetzt | 10,9 | 1,9 | 7 | 20 | 108 |

Wie aus den Meßergebnissen erkennbar ist, sind die Haftklebestreifen der Beispiele 1 und 2 gut vemetzt. Jedoch ist die Reißkraft trotz der Vernetzung noch relativ gering, um diese Klebestreifen universell nutzen zu können. Durch die Vernetzung nimmt bei diesen Mustern die Verklebungsleistung deutlich ab.

Im Gegensatz hierzu ist die Vernetzung bei den Haftklebestreifen der Beispiele 3 und 4 nur sehr gering, was an den geringen Unterschieden in der Versagenstemperatur von unvernetzten und vernetzten Mustern erkennbar ist.

Die Haftklebestreifen entsprechend des Beispiels 5 zeigen eine gute Vernetzung und eine ausreichende Kohäsion und Adhäsion, so daß sie in stripfähigen Klebestreifen universell eingesetzt werden können.

Von den vorgenannten vernetzten Klebestreifen wurde zusätzlich die Schälgeschwindigkeit bei 80 °C bestimmt. Während alle nicht vernetzten Klebestreifen sofort kohäsiv versagen, wurde die Kohäsion durch die Vernetzung erheblich erhöht.

Die Klebestreifen entsprechend der Beispiele 1 und 2 lieferten alle einen Wert über 40 mm, wobei alle vier Klebestreifen adhäsiv versagen. Die Klebestreifen entsprechend der Beispiele 3 und 4 versagen beide kohäsiv. Durch die geringe Vernetzung ist die Kohäsion bei diesen erhöhten Temperaturen zu gering.

Eine Mischung der Elastomere aus den Beispielen 1 und 2 und den Elastomeren aus den Beispielen 3 und 4 zeigen ein deutlich verändertes Verhalten. Die Klebestreifen können ausreichend vernetzt werden, um einen Kohäsionsbruch bei 80 °C zu verhindern. Andererseits reicht die Verklebungsfestigkeit aus, um auch ein schnelles adhäsives Abschälen zu verhindern.

Bei dem Klebestreifen gemäß Beispiel 5 betrug der Schälweg nach 24 Stunden nur 4 mm.

Mit einer Kombination von leicht vernetzbaren Elastomeren mit geringem Blockpolystyrolgehalt und Styrolblockcopolymeren mit hohem Blockpolystyrolgehalt können somit Klebefolienstreifen hergestellt werden, die stripfähig und trotzdem bei hohen Temperaturen noch funktionsfähig sind.

Die mechanischen und klebtechnischen Daten wurden wie folgt ermittelt:

### Kippscherfestigkeit

Zur Bestimmung der Kippscherfestigkeit wird die zu prüfende Klebstoffolie der Abmessung 20 mm x 50 mm, die an einem Ende beidseitig mit einem nicht haftklebrigen Anfasserbereich versehen ist (erhalten durch Aufkaschieren von 25 µm starker biaxial verstreckter Polyestertolie der Abmessungen 20 mm x 13 mm (Hostaphan RN 25)) mittig auf eine hochglanzpolierte quadratische Stahlplatte der Abmessung 40 mm Länge x 40 mm Breite x 3 mm Dicke verklebt. Diese Stahlplatte simuliert in besonders gut reproduzierbarer Weise die Grundplatte eines Hakens.

Die Stahlplatte ist rückseitig mittig mit einem 10 cm langen Stahlstift versehen, welcher vertikal auf der Plattenfläche sitzt. Die erhaltenen Probekörper werden mit einer Kraft von 100 N auf den zu prüfenden Haftgrund, der ebenfalls eine Stahloberfläche ist, mit einer Andruckzeit von 5 Sekunden verklebt und 5 Minuten im unbelasteten Zustand belassen, wird also nicht mehr angedrückt und noch nicht auf Scherung, Kippung und Schälung beansprucht.
Damit ist der Prüfling präpariert.

Sodann wird der Prüfling belastet, wobei nach Beaufschlagung der gewählten Kippscherbelastung durch Anhängen eines Gewichtes (20 N bei 50 mm Hebelarm) die Zeit bis zum Versagen der Verklebung (Kippscherstandzeit) ermittelt wird. Das Testklima ist dabei 23°C bei einer relativen Luftfeuchtigkeit von 50 %.
Diese Kraft und dieser Hebelarm ergeben ein Drehmoment, das etwa 10mal so hoch ist wie das beim durchschnittlichen Verbraucher tatsächlich auftretende, das durch eine Kraft von etwa 10 N bei einem Hebelarm von etwa 10 mm erzeugt wird.

Die etwa 10fach überhöhte mechanische Belastung begrenzt die Versuchszeit auf ein erträgliches Maß. Eine sinnvolle Geschwindigkeit technischer Entwicklung wäre nicht erreichbar bei Versuchsdauern im Bereich von Jahren. Zwar kann so nicht unmittelbar von den hier ermittelten Standzeiten auf diejenigen unter praxistypischen Bedingungen geschlossen werden, gleichwohl erhält man eine Reihenfolge der Prüflinge vom besten zum schlechtesten.

Es werden nun zwei verschiedene Kippscherstandzeiten gemessen, und zwar
- die Trockenkippscherstandzeit bei etwa normalem Raumklima, nämlich 23 °C bei relativer Luftfeuchtigkeit von 50 % und
- die Feuchtkippscherstandzeit bei tropischem Raumklima, nämlich 35 °C bei relativer Luftfeuchtigkeit von 85 %, ein Klima das typischerweise in kleinen Bädern nach ausgiebigem Duschen entsteht.

### Besonderheiten im Feuchtversuchsaufbau

Ebenfalls zur Verkürzung der Versuchszeiten ist die Klimabelastung bei Messung der Feuchtkippscherstandzeit gegenüber den in Privathäusern tatsächlich herrschenden Bedingungen insofern drastisch überhöht, als das genannte Tropenklima in der Praxis nur zweimal für jeweils höchstens eine Stunde pro Tag herrscht und nicht etwa für alle 24 Stunden eines Tages, wie bei der Prüfung. Diese mindestens um den Faktor 12 gegenüber der tatsächlichen Praxis überhöhte Einwirkungszeit pro Tag hat einen sehr hohen Einfluß auf die Standzeit, weil sich unter den tatsächlichen Bedingungen ein Teil der Feuchtigkeitsunterwanderung der Klebestelle durch Austrocknung jeweils wieder zurückbilden kann, während dies bei einer Dauerbelastung nicht möglich ist. Erfahrungsgemäß halten die Klebestreifen bei einer Anwendung im Badezimmer mit den dort üblichen Belastungen etwa 20 mal so lange wie bei diesen Überlastbedingungen des Feuchtkippscherversuches, die nur gewählt wurden, um eine überschaubare Testzeit zu erhalten.

Außer im Klima unterscheiden sich die Versuchsaufbauten für die Trocken- und Feuchtkippscherstandzeiten auch darin, daß zur Messung der Trockenkippscherstandzeit als Untergrund eine polierte Stahloberfläche verwendet wurde, wie dies üblich ist, um Vergleiche mit anderweitig mitgeteilten Versuchsergebnissen zu ermöglichen, während zur Messung der Feuchtkippscherstandzeit die schwierigste glatte Oberfläche überhaupt gewählt wurde, nämlich Glas. Während es im Trockenversuch nur geringfügige Festigkeitsunterschiede zwischen den Klebefestigkeiten auf Stahl und Glas gibt, sind diese Unterschiede beim Feuchtversuch dramatisch: Auf Stahl stellt sich nur eine geringfügige Verschlechterung ein, auf Glas eine ganz wesentliche.

Die im Feuchtversuch verwendeten Fensterglasplatten sind 4 mm dick und sind kurz vor der Verklebung mit Ethylacetat und Ethanol gereinigt worden.

### Schälfestigkeit

Die Prüflinge sind 20 mm breite Haftklebestreifen. Für diese Messung werden sie einseitig vollflächig mit einer 23 µm starken PET-Folie des schon erwähnten Typs Hostaphan RN 25 luftblasenfrei einkaschiert und danach die zweite Klebfolienstreifenseite an einem Ende mit einem ca. 6 mm langen Folienstreifen, ebenfalls aus Hostaphan RN 25, abgedeckt, so daß an diesem Ende ein beidseitig nicht haftklebriger Anfasserbereich entsteht. Hiernach wird der zu prüfende Klebfolienstreifen vorderseitig, mit leichtem Fingerandruck auf den Prüfuntergrund aufgeklebt.

Der Prüfuntergrund ist eine Raufasertapete, nämlich der gängigste Typ "52" der Marke "Erfurt". Diese Raufasertapete weist eine mittlere Körnung auf und besteht nur aus Papier und Holzschnitzeln, enthält insbesondere keine Schaumstoffpartikel. Diese Tapete ist auf eine Preßspanplatte geklebt und sie ist auf ihrer Sichtseite mit der Wandfarbe der Marke "Herbol" des Typs "Zenit LG" gestrichen. Jeder Prüfling wird anschließend 10 Sekunden lang mit einem Anpreßdruck von 90 N pro 10 cm² Haftklebefläche angedrückt und danach 15 Minuten lang ohne Krafteinwirkung bei 40 °C gelagert.
Die Prüfplatten werden anschließend horizontal aufgehängt, so daß der nicht klebende Anfasser der Klebestreifen nach unten weist. An den Anfasser wird mit Hilfe einer 20 Gramm wiegenden Klemme ein Gewicht von 50 Gramm befestigt, so daß eine Schälbelastung von etwa 0.7 N orthogonal zur Verklebungsebene wirkt. Als Schälweg wird diejenige Strecke in Millimeter pro Tag gemessen, die der Klebestreifen zwischen einem ersten Zeitpunkt etwa 15 Minuten nach Versuchsbeginn und einem zweiten Zeitpunkt nach weiteren 24 h abgeschält ist.

Analog dem, was bereits unter Kippscherstandzeit gesagt wurde, wird auch die Schälfestigkeit sowohl im Trockenversuch als auch im Feuchtversuch ermittelt, wobei hier der Trockenversuch durch eine Raufaseroberfläche als Haftuntergrund, eine Temperatur von 23°C und eine relative Luftfeuchtigkeit von 50 % gekennzeichnet ist, während der Feuchtversuch auf einer gereinigten Glasoberfläche bei 35°C und 85 % relativer Luftfeuchtigkeit erfolgt.

### Zugfestigkeit // maximale Dehnung

Messungen erfolgen, wenn nicht anders vermerkt, in Anlehnung an DIN 53504 mit Verwendung von Schulterstäben der Größe S3 sowie bei einer Separationsgeschwindigkeit von 300 mm/min.

### Ablösekraft (Stripkraft; Stripspannung)

Zur Ermittlung der auch als "Stripkraft" bezeichneten Ablösekraft, wird eine 50 mm lange und 20 mm breite Klebfolie mit einem nicht klebrigen Anfasser an ihrem oberen Ende zwischen zwei deckungsgleich zueinander angeordneten Stahlplatten der Abmessungen 50 mm x 30 mm geklebt wie im Absatz "Kippscherstandzeit" beschrieben, jedoch mit Anpreßdrucken von jeweils 500 N. Die Stahlplatten nehmen in je einer Bohrung an ihrem unteren Ende einen S-förmigen Stahlhaken auf. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden 24 h bei +40°C gelagert. Nach Abkühlung auf Raumtemperatur wird der Klebfolienstreifen mit einer Zuggeschwindigkeit von 1000 mm/min parallel zur Verklebungsebene und kontaktfrei zu den Kantenbereichen der beiden Stahlplatten herausgelöst. Dabei wird die erforderliche Ablösekraft in N gemessen. Angegeben wird der Mittelwert der Stripspannungswerte (in N/mm²), gemessen in dem Bereich, in welchem der Klebestreifen auf einer Verklebungslänge zwischen 10 mm und 40 mm von den Stahluntergründen abgelöst ist.

## Patentansprüche

1. Verwendung einer Haftklebemasse zur Herstellung eines Haftklebfolienstreifens zur Schaffung einer durch dehnende Verstreckung in Richtung der Verklebungsebene wieder lösbaren Verbindung bestehend aus einem Gemisch enthaltend
a) ein Styrolblockcopolymer, das einen Anteil größer 30% an 1,2-verknüpftem Dien im Elastomerblock enthält, so dass es durch UV-Licht oder Elektronenstrahlen im Elastomerblock vernetzt werden kann, und
b) ein oder mehrere Blockcopolymere, bestehend aus Vinylaromatenblöcken und Elastomerblöcken, wobei der Blockpolyvinylaromatengehalt größer als 20 % ist, und
c) ein oder mehrere Klebharze.

2. Verwendung nach Anspruch 1, **dadurch gekennzeichnet, dass** die Blockcopolymere nach 1b) Polystyrolendblöcke besitzen.

3. Verwendung nach Anspruch 1 oder 2, **dadurch gekennzeichnet, dass** die Blockcopolymere nach 1b) einen Polyvinylaromatenanteil von 20 bis 40 Gew.-%. vorzugsweise 25 bis 35 Gew.-%, und/oder einen Gehalt von Dreiblöcken von mehr als 60 Gew.-%, vorzugsweise von mehr als 75 Gew.-% haben.

4. Verwendung nach einem der vorhergehenden Ansprüche, **dadurch gekennzeichnet, dass** die Styrolblockcopolymere nach 1a) 1,2-verknüpftes Polybutadien oder Polyisopren aufweisen.

5. Verwendung nach zumindest einem der vorhergehenden Ansprüche **dadurch gekennzeichnet, dass** die Styrolblockcopolymere aus Styrol-Butadien-Blockcopolymeren oder Styrol-Isopren-Blockoopolymeren gebildet sind.

6. Verwendung nach zumindest einem der vorhergehenden Ansprüche, **dadurch gekennzeichnet, dass** die Styrolblockcopolymere polydienhaltige Elastomerblöcke, insbesondere Copolymere, mehrerer unterschiedlicher 1,3-Diene haben.

7. Verwendung nach zumindest einem der vorhergehenden Ansprüche, **dadurch gekennzeichnet, dass** die Styrolblockcopolymere funktionalisiert sind, insbesondere maleinsäureanhydridmodifiziert oder silanmodifiziert.

8. Verwendung nach zumindest einem der vorhergehenden Ansprüche, **gekennzeichnet durch** einen Anteil von 20 bis 70 Gew.-%, bevorzugt von 30 bis 60 Gew.-%, ganz besonders bevorzugt von 35 bis 55 Gew.-% von Styrolblockcopolymere bezogen auf die gesamte Klebmasse.

9. Verwendung nach zumindest einem der vorhergehenden Ansprüche, **dadurch gekennzeichnet, dass** die Haftklebemasse weitere Abmischkomponenten enthält, insbesondere Weichmacher, Alterungsschutzmittel, Verarbeitungshilfsmittel, Füllstoffe, Farbstoffe, optische Aufheller, Stabilisatoren.

10. Verwendung nach zumindest einem der vorhergehenden Ansprüche, **dadurch gekennzeichnet, dass** die Haftklebemasse Vemetzungspromotoren enthält.

11. Verwendung nach zumindest einem der vorhergehenden Ansprüche, **dadurch gekennzeichnet, dass** der Haftklebfolienstreifen zumindest auf einer Seite haftklebrig ist.

## Claims

1. Use of a pressure sensitive adhesive to produce a pressure sensitive adhesive sheet strip for providing a bond which can be released again by stretching in the direction of the bond plane, composed of a mixture comprising
a) a styrene block copolymer containing more than 30% of 1,2-linked diene in the elastomer block, so that it can be crosslinked in the elastomer block by UV-light or electron beams, and
b) one or more block copolymers composed of vinylaromatic blocks and elastomer blocks, the block polyvinylaromatic content being greater than 20%, and
c) one or more tackifier resins.

2. Use according to Claim 1, **characterized in that** the block copolymers according to 1b) possess polystyrene end blocks.

3. Use according to Claim 1 and 2, **characterized in that** the block copolymers according to 1b) have a polyvinylaromatics fraction of from 20 to 40% by weight, preferably from 25 to 35% by weight, and/or a triblock content of more than 60% by weight, preferably more than 75% by weight.

4. Use according to any of the preceding claims, **characterized in that** the styrene block copolymers according to 1a) comprise 1,2-linked polybutadiene or polyisoprene.

5. Use according to at least one of the preceding claims, **characterized in that** the styrene block copolymers are formed of styrene-butadiene block copolymers or styrene- isoprene block copolymers.

6. Use according to at least one of the preceding claims, **characterized in that** the styrene block copolymers have polydiene-containing elastomer blocks, especially copolymers of two or more different 1,3-dienes.

7. Use according to at least one of the preceding claims, **characterized in that** the styrene block copolymers are functionalized, in particular being maleic anhydride-modified or silane-modified.

8. Use according to at least one of the preceding claims, **characterized by** a fraction of 20 to 70% by weight, preferably from 30 to 60% by weight, with very particular preference from 35 to 55% by weight, of styrene block copolymer based on the overall adhesive.

9. Use according to at least one of the preceding claims, **characterized in that** the pressure sensitive adhesive comprises further blend components, especially plasticizers, ageing inhibitors, processing assistants, fillers, dyes, optical brighteners, and stabilizers.

10. Use according to at least one of the preceding claims, **characterized in that** the pressure sensitive adhesive comprises crosslinking promoters.

11. Use according to at least one of the preceding claims, **characterized in that** the pressure sensitive adhesive sheet strip is pressure-sensitively adhesive on at least one side.

## Revendications

1. Utilisation d'une masse autoadhésive pour la préparation d'une bande autoadhésive en vue de procurer une liaison détachable par étirement d'allongement dans la direction du plan de collage, constituée d'un mélange contenant
a) un copolymère bloc de styrène, qui contient une fraction de plus de 30% de diène à liaison 1,2 dans le bloc élastomère de manière à permettre une réticulation par lumière UV ou faisceaux électronique dans le bloc élastomère, et
b) un ou plusieurs copolymères blocs, consistant en blocs vinylaromatiques et blocs élastomères, la teneur en blocs de polyvinyle étant supérieure à 20%, et
c) une ou plusieurs résines adhésives.

2. Utilisation selon la revendication 1, **caractérisée en ce que** les copolymères blocs selon 1b) possèdent des blocs terminaux de polystyrène.

3. Utilisation selon la revendication 1 ou 2, **caractérisée en ce que** les copolymères blocs selon 1b) possèdent une fraction de polyvinylaromatique de 20 à 40% en poids, de préférence de 25 à 35% en poids, et/ou une fraction de triblocs de plus de 60% en poids, de préférence de plus de 75% en poids.

4. Utilisation selon l'une quelconque des revendications qui précèdent, **caractérisée en ce que** les copolymères blocs de styrène selon 1a) présentent du polybutadiène à liaison 1,2 ou du polyisoprène.

5. Utilisation selon au moins l'une quelconque des revendications qui précèdent, **caractérisée en ce que** les copolymères blocs de styrène sont formés de copolymères blocs de styrène - isoprène ou de copolymères blocs de styrène - butadiène.

6. Utilisation selon au moins l'une quelconque des revendications qui précèdent, **caractérisée en ce que** les copolymères blocs de styrène possèdent des blocs élastomères contenant du polydiène, en particulier des copolymères de plusieurs 1,3-diènes différents.

7. Utilisation selon au moins l'une quelconque des revendication qui précèdent, **caractérisée en ce que** les copolymères blocs de styrène sont fonctionnalisés, en particulier modifiés par de l'anhydride d'acide maléique ou modifiés par du silane.

8. Utilisation selon au moins l'une quelconque des revendications qui précèdent, **caractérisée par** une fraction de 20 à 70% en poids, de préférence de 30 à 60% en poids, plus préférentiellement de 35 à 55% en poids de copolymères blocs de styrène, par rapport à la totalité de la masse adhésive.

9. Utilisation selon au moins l'une quelconque des revendications qui précèdent, **caractérisée en ce que** la masse autoadhésive contient d'autres composants de mélange, en particulier des plastifiants, des agents de protection contre le vieillissement, des adjuvants de transformation, des charges, des colorants, des azurants optiques, des stabilisants.

10. Utilisation selon au moins l'une quelconque des revendications qui précèdent, **caractérisée en ce que** la masse autoadhésive contient des promoteurs de réticulation.

11. Utilisation selon au moins l'une quelconque des revendications qui précèdent, **caractérisée en ce que** les bandes autoadhésives sont autoadhésives sur au moins une face.
